# EUROPEAN PATENT APPLICATION

(11) **EP 2 407 864 A1**
(43) Date of publication of application: **18.01.2012**
(21) Application number: 09841339.6
(22) Date of filing: 01.07.2009
(51) Int. Cl.: G06F 3/041

(54) **PRESSURE SENSITIVE TOUCH CONTROL DEVICE**

(30) Priority: 13.03.2009 CN 200910008185
(71) Applicant: TPK Touch Solutions Inc., Taipei City 106 (TW)
(72) Inventor: LIU, Chen-yu, Taoyuan County Taiwan 320 (CN); WANG, Ching-yi, Taoyuan County Taiwan 320 (CN)
(74) Representative: Berkkam, Ayfer
(86) International application number: PCT/CN2009/072588
(87) International publication number: WO 2010/102470

(57) **Abstract**

A pressure detectable touch device includes a first substrate, a conductive layer formed on the first substrate, a second substrate, a first electrode pattern, a second electrode pattern, and a microprocessor. When a user touches a touch operation surface of the touch device in such an extent that the conductive layer and the first electrode pattern are not put into physical contact with each other, the touch device is set in a capacitive touch position detection mode. When the user forcibly depresses the touch operation surface of the touch device or carries out a hand writing input operation on the touch operation surface of the touch device, the conductive layer is caused to physically engage the first electrode pattern, setting the touch device in a resistive touch position detection mode.

## Description

### FIELD OF THE INVENTION

The present invention relates to a touch device, and in particular to a pressure detectable touch device that combines capacitive and resistive touch control operations.

### BACKGROUND OF THE INVENTION

A resistive touch panel comprises an Indium-Tin-Oxide (ITO) film and a sheet of electrically conductive glass, such as ITO glass, which are spaced from each other by a plurality of properly distributed insulation spacers. With a predetermined driving voltage applied between the ITO film and the ITO glass, when a touching object, such as a stylus, touches and depresses the ITO film, a local depression is formed, which makes a contact with the ITO glass located below thereby inducing a variation of voltage, which, through conversion from analog signal into digital signal, is applied to a microprocessor to be processed for calculation and determination of the position coordinates of the touched point.

A capacitive touch panel generally makes use of variation of electrical capacity coupling between arranged transparent electrodes and a conductor to generate an induced current by which the position coordinates of a touched point can be determined. In the structure of the capacitive touch panel, the outermost layer is a thin transparent substrate that is made of hardening-processed silicon dioxide, and the second layer is an ITO layer. A uniform electric field is built up on the surface of the glass sheet. When a touching object, such as a user's finger, is put in touch with the surface of the transparent substrate that constitutes a screen, the touching object induces electric capacity coupling with the electric field on the outer conductive layer, leading to minute variation of current. Each electrode is responsible for measuring the current from the respective corner and a microprocessor then performs calculation to determine the position coordinates of the touching object.

### SUMMARY OF THE INVENTION

However, the resistive touch panel and the capacitive touch panel both suffer certain limitations on the operations thereof and have drawbacks. The resistive touch panel, although having an advantage of low cost, needs to cause physical contact between a driving conductive layer and a detection conductive layer in the operation thereof. Thus, a pressure must be applied to quite an extent. This often leads to damage of the conductive layers. Also, the sensitivity is low. On the other hand, although having high sensitivity, a capacitive touch panel, due to the operation principle thereof, must be operated with a touching object that is a conductor, such as a user's finger or a touch head, in order to conduct electric current therethrough. The capacitive touch panel cannot be operated with an insulative touching object.

Further, in an electronic device that is equipped with touch input means, hand writing input is commonly adopted. To carry out hand writing input, a user often uses a hand to hold a touch stylus with a predetermined pressure and writes in a regular manner. The touch operation surface of the electronic device may then generate successive position coordinates and a microprocessor calculates and determines a writing trace on the touch operation surface according to the detected position coordinates. General problems that a capacitive touch panel suffers in detecting hand writing input are unsmoothness of writing operation and poor detection result.

Thus, an objective of the present invention is to provide a touch device that switches between different touch position detection modes in accordance with the different ways that a user touches and operates the touch device whereby when a user touches, with a soft force, a touch operation surface of the touch device, the touch device operates in a capacitive touch position detection mode, and when the user forcibly depresses the touch operation surface of the touch device or carries out a hand writing input operation on the touch operation surface of the touch device, the touch device operates in a resistive touch position detection mode.

The technical solution that the present invention adopts to overcome the above discussed problems is a touch device that combines capacitive and resistive touch operation modes for detecting a touch operation that is applied thereto by a touching object. The touch device comprises a conductive layer, a first electrode pattern, a second electrode pattern, and a microprocessor. The conductive layer is formed on a first substrate and is applied with a driving voltage. The first electrode pattern forms a first capacitance with respect to the conductive layer and the second electrode pattern forms a second capacitance with respect to the conductive layer.

When a user touch a touch operation surface of the touch device, the conductive layer is depressed at the operation position, causing a variation of the distance between the conductive layer and the first electrode pattern and also a variation of the distance between the conductive layer and the second electrode pattern. As a consequence, the electric capacity coupling between the conductive layer and the first electrode pattern and the electrical capacity coupling between the conductive layer and the second electrode pattern are changed, setting the touch device to operate in the capacitive touch position detection mode. The microprocessor calculates and determines the operation position of the touching object on the conductive layer according to the change of the electric capacity coupling between the conductive layer and the first electrode pattern and the change of the electric capacity coupling between the conductive layer and the second electrode pattern.

When a user forcibly depresses the touch operation surface of the touch device, or carries out a hand writing input operation on the touch operation surface of the touch device, the conductive layer is depressed at the operation position, making the conductive layer engaging strip-like electrodes of the first electrode pattern so that the distance therebetween is zero, which sets the touch device to operate in the resistive touch position detection mode. The conductive layer, being depressed, is in physical contact with the first electrode pattern and the microprocessor calculates and determines at least one operation position of the touching object on the conductive layer according to variation of voltage of the depressed first electrode pattern.

With the technical solution adopted in the present invention, the pressure detectable touch device of the present invention, when integrated with a simple scanning detection process, is operable in the touch operation mode of either a capacitive touch panel or a resistive touch panel. Constraint in the touching object usable in the conventional resistive touch panel or the capacitive touch panel can be eliminated and the touch control operation of the touch device is simplified. The touch device can be selectively operated in an optimum touch control mode in accordance with different ways of operation. The design provided by the present invention widens the applications of the touch device and features combination of two touch control operation modes.

The present invention can automatically switch to a proper touch position detection mode in accordance with different operation behaviors of users in using the touch device. The present invention is particularly suitable in the applications where hand writing input is applied to the touch device to effectively solve the problems of unsmooth hand writing input and poor detection result found in the conventional capacitive touch panels.

### BRIEF DESCRIPTION OF THE DRAWINGS

The present invention will be apparent to those skilled in the art by reading the following description of preferred embodiments thereof with reference to the drawings, in which:

**Figure 1** shows a system block diagram of a first embodiment in accordance with the present invention;

**Figure 2** shows an exploded view of major constituent components of Figure 1;

**Figure 3** shows relative positional relationship between a first electrode pattern and a second electrode pattern after a first substrate and a second substrate of **Figure 1** are bonded together;

**Figure 4** shows a cross-sectional view taken along line **4-4** of **Figure 3****;**

**Figure 5** shows a top plan view of a second substrate of the first embodiment of the present invention;

**Figure 6** shows a top plan view of a second substrate of a second embodiment of the present invention;

**Figures 7A** and **7B** schematically demonstrate a touch device in accordance with the present invention operated by a user's finger;

**Figure 8** shows a table listing capacitance corresponding to each touch position demonstrated in Figures **7A** and **7B****;**

**Figure 9** schematically shows the touch device of the present invention operated with a touching object;

**Figure 10** shows a system block diagram of the present invention demonstrating the operation by using the touching object of **Figure 9****;**

**Figures 11A, 11B****,** and **11C** demonstrate an input operation of hand writing by using a touching object on the touch device in accordance with the present invention;

**Figure 12** shows a system block diagram in association with the hand writing operation demonstrated in **Figures 11A, 11B****,** and **11C****;**

**Figure 13** shows a system block diagram of a third embodiment in accordance with the present invention; and

**Figure 14** shows a cross-sectional view of the third embodiment of the present invention.

### DETAILED DESCRIPTION OF THE PREFERRED EMBODIMENTS

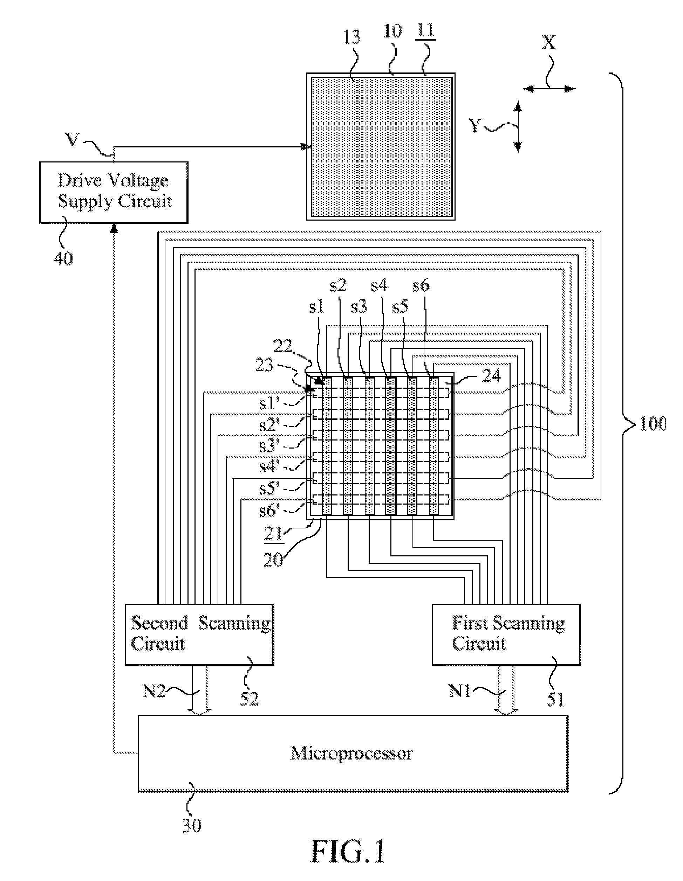

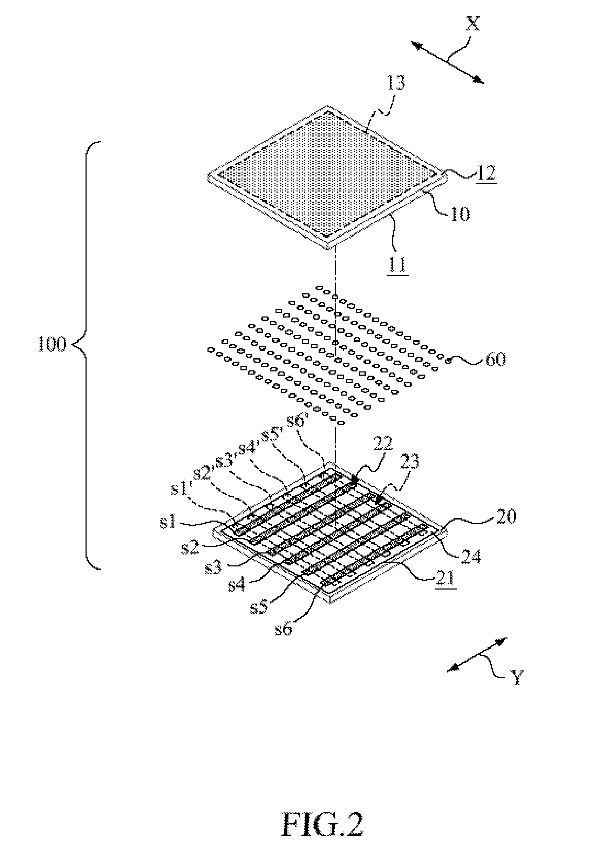

With reference to the drawings and in particular to **Figure 1****,** which shows a system block diagram of a first embodiment in accordance with the present invention, and **Figure 2****,** which shows an exploded view of major constituent components of **Figure 1****,** the present invention provides a touch device **100** that comprises a first substrate **10,** a second substrate **20,** and a microprocessor **30.**

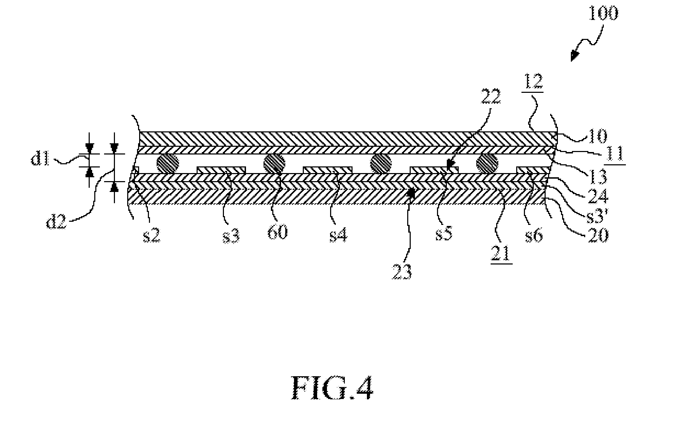

The first substrate **10** comprises a transparent insulation film having a conductive layer bonding surface **11** and a touch operation surface **12** (also see **Figure 4****).** The conductive layer bonding surface **11** of the first substrate **10** forms a conductive layer **13** thereon, which is made of primarily conductive material. The conductive substance can be for example ITO (Indium Tin Oxide), which forms a transparent electrically-conductive layer.

A driving voltage supply circuit **40** is controlled by the microprocessor **30** to generate and apply a driving voltage **V** to the conductive layer **13,** so that the conductive layer **13** can serve as a driving conductive layer for resistive touch operation.

The second substrate **20** comprises an electrode pattern bonding surface **21** opposing the conductive layer bonding surface **11** of the first substrate **10.** A first electrode pattern **22** and a second electrode pattern **23** are formed on the electrode pattern bonding surface **21.** As shown in **Figures 2** and **4****,** an insulation layer **24** is set between spaces the first electrode pattern **22** and second electrode pattern **23** from each other. The distance between the first electrode pattern **22** and the conductive layer **13** of the first substrate **10** will be referred to as a first predetermined distance **d1,** while the distance between the second electrode pattern **23** and the conductive layer **13** of the first substrate **10** will be referred to as a second predetermined distance **d2.**

The first electrode pattern **22** comprises a plurality of strip-like electrodes **s1, s2, s3, s4, s5, s6,** and induces first capacitance **Cx** with respect to the conductive layer **13** of the first substrate **10.** The strip-like electrodes **s1, s2, s3, s4, s5, s6** of the first electrode pattern **22** are substantially parallel to each other and are formed on the insulation layer **24** in such a manner that the strip-like electrodes **s1, s2, s3, s4, s5, s6** are spaced from each other. On each of local areas between the insulation layer **24** and the conductive layer **13** of the first substrate **10** where no strip-like electrodes **s1, s2, s3, s4, s5, s6** are located, at least one insulation spacer **60** is provided. The insulation spacers **60** function to prevent the conductive layer **13** of the first substrate **10** from directly contacting the first electrode pattern **22.**

The second electrode pattern **23** comprises strip-like electrodes **s1', s2', s3', s4', s5', s6**' and induces a second capacitance **Cy** with respect to the conductive layer **13** of the first substrate **10.** The strip-like electrodes **s1', s2', s3', s4', s5', s6'** are substantially parallel to each other and are arranged on the electrode pattern bonding surface **21** of the second substrate **20** in such a way that the strip-like electrodes **s1', s2', s3', s4', s5', s6**' are spaced from each other.

In the embodiment illustrated, the first electrode pattern **22** and the second electrode pattern **23** are each illustratively comprised six strip-like electrodes, but it is apparent that the number of the strip-like electrodes can be varied to be greater or smaller than this number.

In the first electrode pattern **22,** the strip-like electrodes **s1, s2, s3, s4, s5, s6** are substantially parallel to each other and are spaced from each other by a predetermined distance and extend along a first axis **Y.** The strip-like electrodes **s1', s2', s3', s4', s5', s6**' of the second electrode pattern **23** are also parallel to each other, spaced from each other by a predetermined distance and extending along a second axis **X.** The strip-like electrodes **s1, s2, s3, s4, s5, s6** of the first electrode pattern **22** are set at an angle, which can be a right angle or other angles, with respect to the strip-like electrodes **s1', s2', s3', s4', s5', s6'** of the second electrode pattern **23.**

The strip-like electrodes **s1, s2, s3, s4, s5, s6** of the first electrode pattern **22** are connected via a first scanning circuit **51** to the microprocessor **30** and the strip-like electrodes **s1', s2', s3', s4', s5', s6**' of the second electrode pattern **23** are connected via a second scanning circuit **52** to the microprocessor **30.**

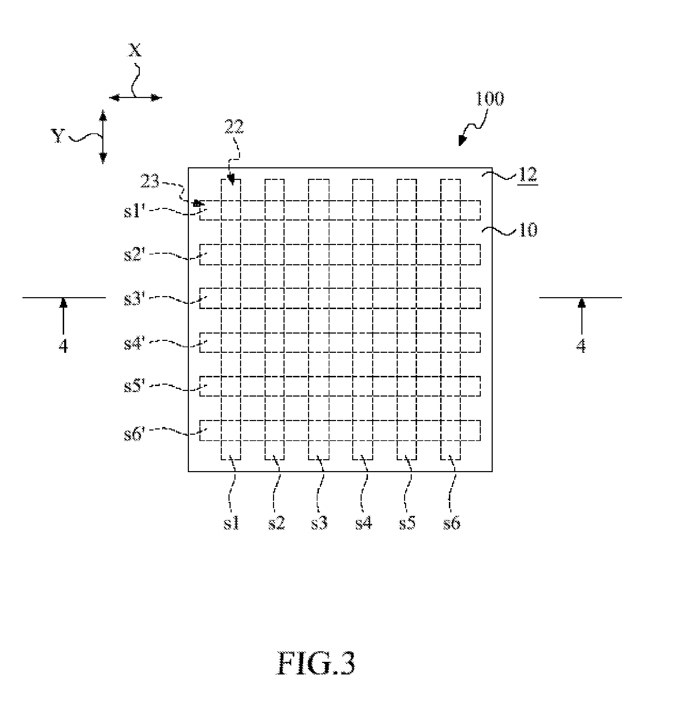

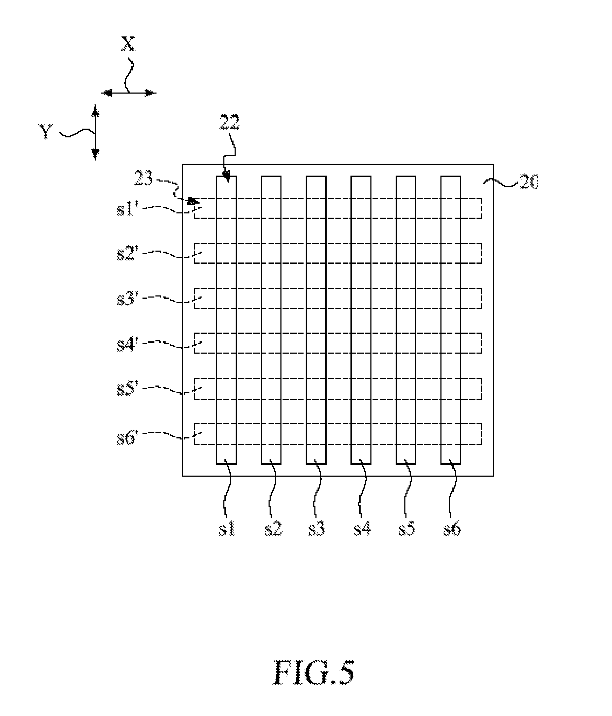

Referring to **Figures 3** and **5****,** **Figure 3** shows the relative positional relationship between the first electrode pattern **22** and the second electrode pattern **23** after the first substrate **10** is bonded to the second substrate **20,** and **Figure 5** shows a top plan view of the second substrate of the first embodiment of the present invention. As shown, the strip-like electrodes **s1, s2, s3, s4, s5, s6** of the first electrode pattern **22** and the strip-like electrodes **s1', s2', s3', s4', s5', s6**' of the second electrode pattern **23** show an intersecting and overlapping arrangement with each intersection point indicating one of a number of touch positions of the touch device **100.**

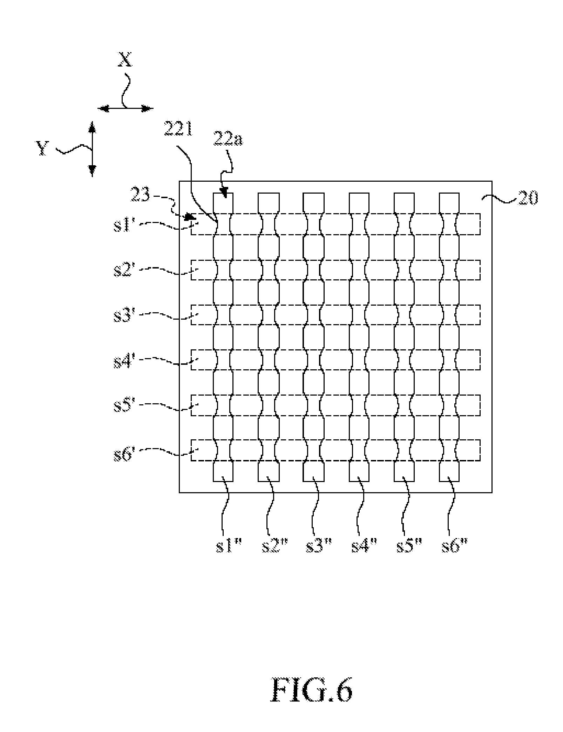

Referring to **Figure 6****,** which shows a top plan view of the second substrate in accordance with a second embodiment of the present invention, the second substrate **20** of the second embodiment is constructed substantially the same as the counterpart thereof in the first embodiment, whereby identical parts are labeled with the same reference numerals and description thereof will be omitted. A difference between the first and second embodiments resides in that the first electrode pattern **22a** comprises strip-like electrodes **s1", s2", s3", s4", s5", s6",** which are constructed in such a way that each of the strip-like electrodes of the first electrode pattern **22a** forms recessed portions **221** corresponding to the intersection points thereof with respect to the strip-like electrodes **s1', s2', s3', s4', s5', s6'** of the second electrode pattern **23** in order to reduce the shielding that the first electrode pattern **22a** may cause on the second electrode pattern **23** and thus improving electrical capacity coupling between the conductive layer **13** and the second electrode pattern **23.**

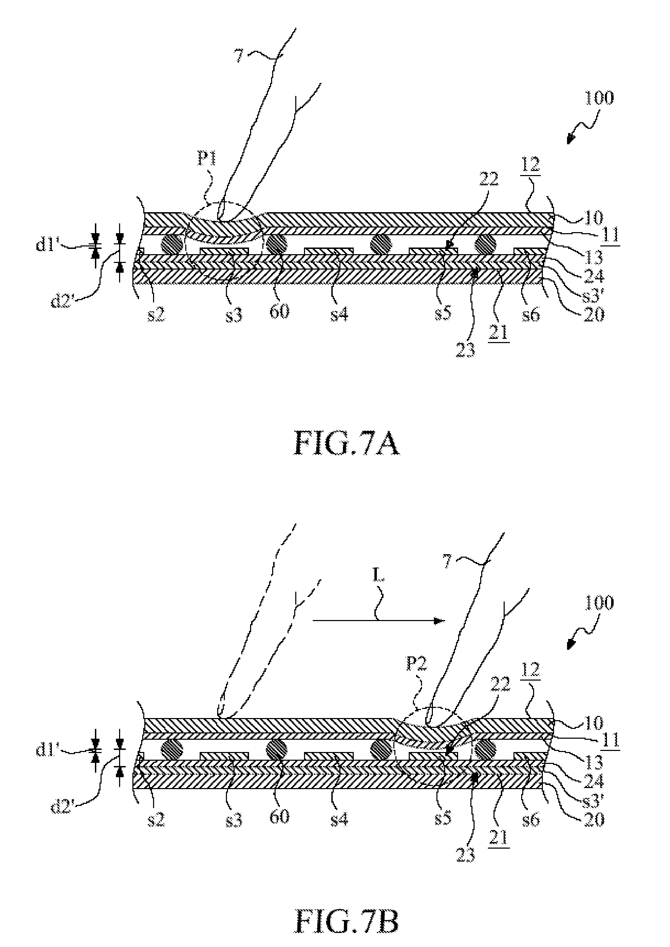

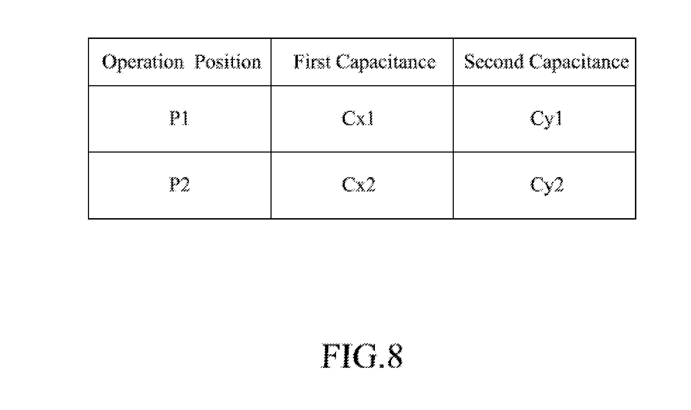

Referring to **Figures 7A, 7B****,** and **8****,** **Figures 7A** and **7B** demonstrate the touch device of the present invention operated by a user's finger and **Figure 8** shows a table listing the capacitance corresponding to each touch position demonstrated in **Figures 7A** and **7B****.**

Firstly, an operation position occurring at the intersection between the strip-like electrode **s3** of the first electrode pattern **22** and the strip-like electrode **s3'** of the second electrode pattern **23** is referred to as operation position **P1,** and an operation position occurring at the intersection between the strip-like electrode **s5** of the first electrode pattern **22** and the strip-like electrode **s3'** of the second electrode pattern **23** is referred to as operation position **P2** (top view positions of these operation positions being visible in **Figure 3****).** In the example illustrated, a touching object **7** that is employed to operate the touch device **100** can be for example a finger, a conductive object, or other suitable operating objects.

The operation of the present invention will now be described. In an idle condition, where no operation is activated, the conductive layer **13** provides electrical capacity coupling with respect to each of the first electrode pattern **22** and the second electrode pattern 23, so that the first capacitance **Cx** is present between the conductive layer **13** and the first electrode pattern **22** and the second capacitance **Cy** is present between the conductive layer **13** and the second electrode pattern **23.** When the conductive layer **13** and the first electrode pattern **22** and the second electrode pattern **23** are not subjected to touch/depression, no variation of distance therebetween occurs and consequently the electric capacity coupling maintains unchanged.

When the touching object **7** touches an operation position **P1** on the touch operation surface **12** of the first substrate **10** (as shown in **Figure 7A****)** to such an extent that the conductive layer **13** is not in physical contact with the first electrode pattern **22,** the conductive layer **13** is depressed at the operation position **P1** so that the first predetermined distance **d1** between the conductive layer **13** and the first electrode pattern **22** is changed to **d1',** where **0<d1'<d1,** and the second predetermined distance **d2** between the conductive layer **13** and the second electrode pattern **23** changes to **d2',** where **0<d2'<d2.** Consequently, the first capacitance **Cx** between the conductive layer **13** and the first electrode pattern **22** is changed to first capacitance **Cx1** and the second capacitance **Cy** between the conductive layer **13** and the second electrode pattern **23** is changed to second capacitance **Cy1**.

Under this condition, the touch device **100** is operated with a capacitive touch position detection mode, wherein the first scanning circuit **51** scans the variation of electric capacity coupling between the conductive layer **13** and each strip-like electrode **s1, s2, s3, s4, s5, s6** of the first electrode pattern **22** and issues a scanning detection signal **N1** to the microprocessor **30.** The second scanning circuit **52** similarly scans the variation of electric capacity coupling between the conductive layer **13** and each strip-like electrode **s1', s2', s3', s4', s5', s6**' of the second electrode pattern **23** and issues a scanning detection signal **N2** to the microprocessor **30.**

The touch device **100** responds to the received variations of the electrical capacity coupling for the first capacitance **Cx1** and the second capacitance **Cy1** and calculates the operation position of the touching object **7** touching the touch operation surface **12** of the first substrate **10** to thereby determine that the detected operation position corresponds to the operation position **P1** at the intersection between the strip-like electrode **s3** in the second direction **X** and the strip-like electrode **s3'** in the first direction **Y.**

When the touching object **7** moves on the touch operation surface **12** of the first substrate **10** along a travel direction **L** from the operation position **P1** to the operation position **P2** (as shown in **Figure 7B****),** the portion of the conductive layer **13** at the operation position **P2** is pressurized, making the first predetermined distance **d1** between the conductive layer **13** and the first electrode pattern **22** changed to **d1',** where **0<d1'<d1** and also making the second predetermined distance **d2** between the conductive layer **13** and the second electrode pattern **23** changed to **d2',** where **0<d2'<d2.** Consequently, the first capacitance **Cx** between the conductive layer **13** and the first electrode pattern **22** changes to a first capacitance **Cx2** and the second capacitance **Cy** between the conductive layer **13** and the second electrode pattern **23** changes to a second capacitance **Cy2.** The same scanning detection process as described above can be applied to detect that the touch point is moved to the operation position **P2,** of which the same description is not necessary herein.

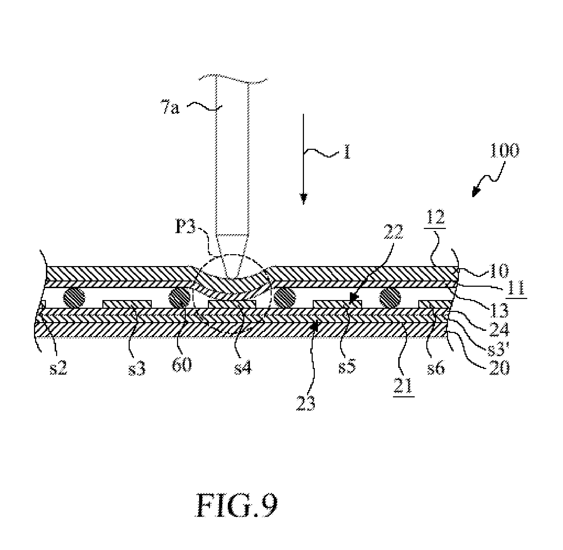

Referring to **Figure 9****,** which shows a schematic view of the touch device of the present invention being operated with a touching object, firstly, an operation position occurring at the intersection between the strip-like electrode **s4** of the first electrode pattern **22** and the strip-like electrode **s3'** of the second electrode pattern **23** is referred to as operation position **P3.** In the instant example, a touching object **7a** that is employed to operate the touch device **100** can be a conductive object or a non-conductive object (such as a touch stylus or other suitable objects).

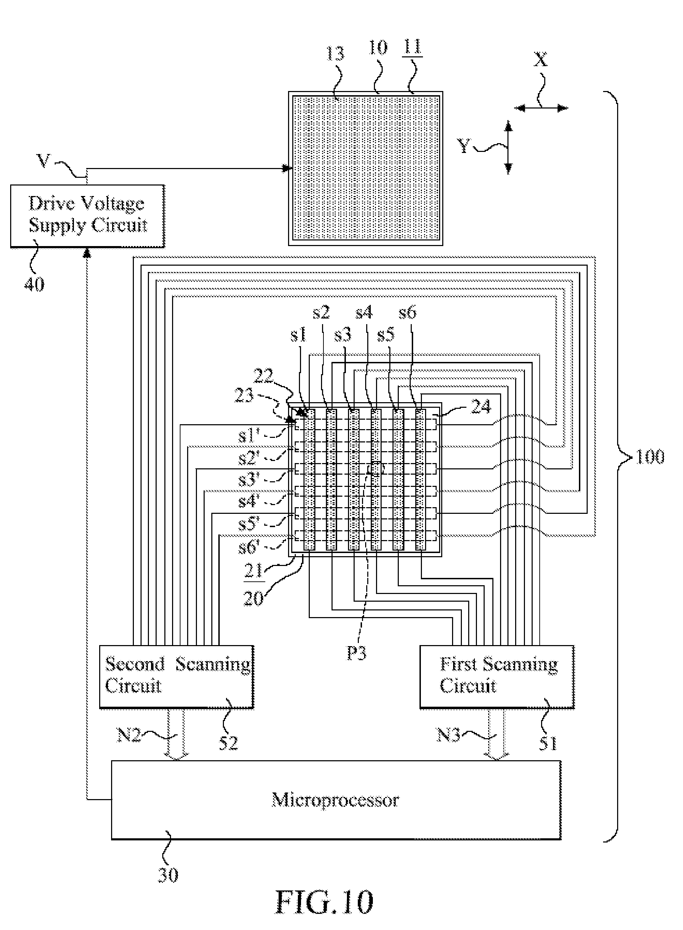

Referring to **Figure 10****,** which shows a system block diagram of the present invention demonstrating the operation by using the touching object **7a** of **Figure 9****,** when a user uses the touching object **7a** to forcibly depress, in a given touching direction **I,** the touch operation surface **12** of the first substrate **10** at the operation position **P3,** the conductive layer **13** and the strip-like electrode **s4** of the first electrode pattern **22** at the operation position **P3** are depressed so that the first predetermined distance **d1** between them becomes **d1=0** (also see **Figure 4****).**

Under this condition, the touch device **100** is operated with a resistive touch position detection mode, wherein the driving voltage supply circuit **40** supplies the driving voltage **V** to the conductive layer **13** of the first substrate **10** and the conductive layer **13** transmits the driving voltage **V** to a corresponding position on the first electrode pattern **22.** Thus, when the conductive layer **13** of the first substrate **10,** due to depression, becomes in physical contact with the first electrode pattern **22** at the touched position, the driving voltage **V** is applied to the strip-like electrode **s4** of the first electrode pattern **22.** The first scanning circuit **51,** by performing a scanning operation, detects the variation of voltage in the strip-like electrode **s4** of the first electrode pattern **22** and then issues a scanning detection signal **N3** to the microprocessor **30.** The microprocessor **30** responds to the variation of voltage in the strip-like electrode **s4** of the first electrode pattern **22** and calculates the operation position **P3** of the touching object **7a** operating on the touch operation surface **12** of the first substrate **10.**

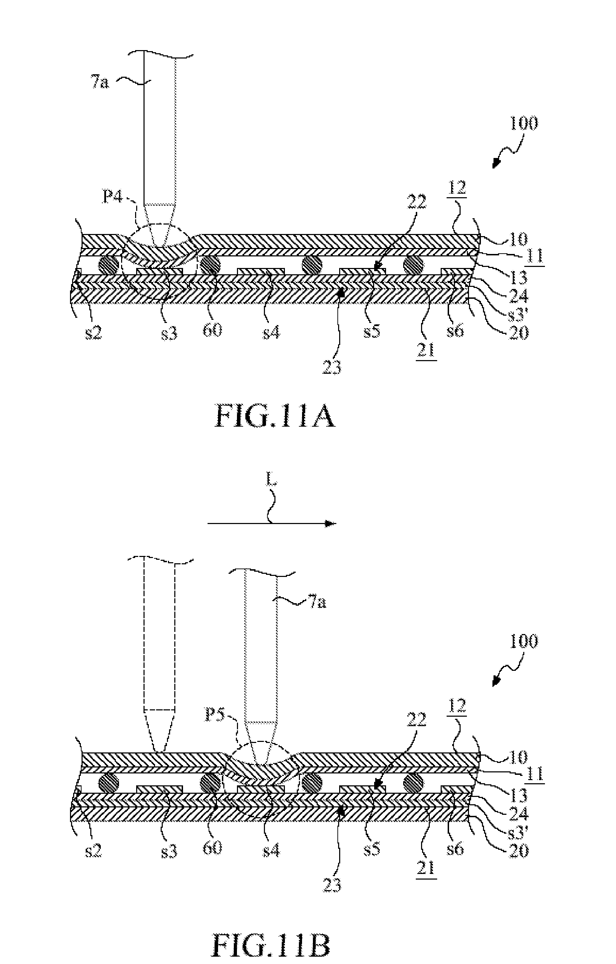

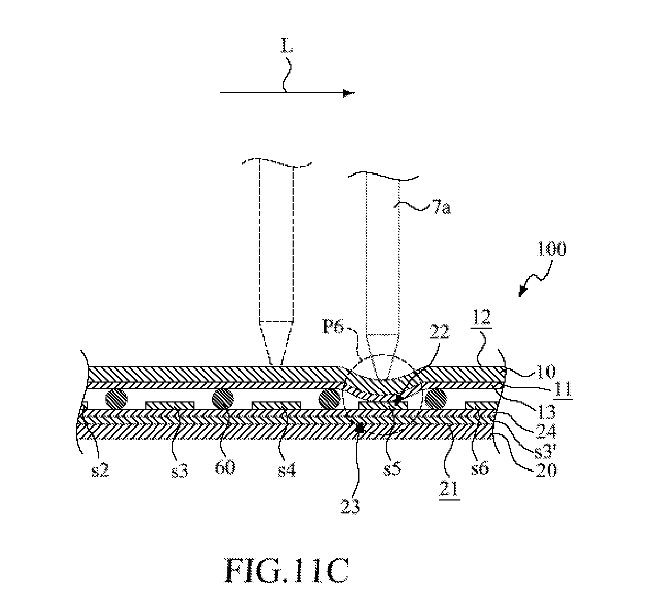

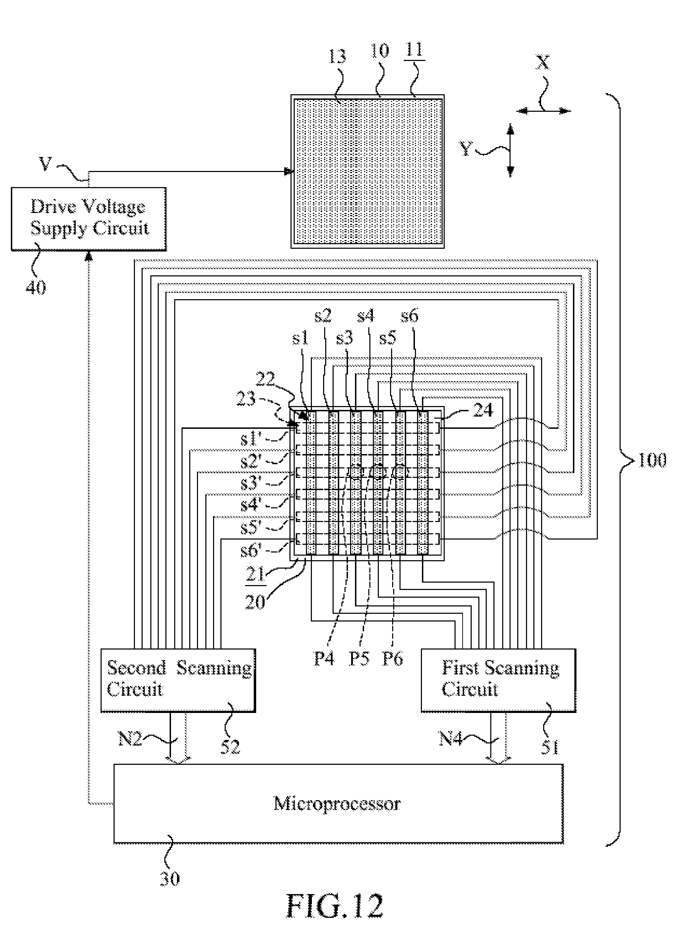

**Figures 11A, 11B****,** and **11C** demonstrate an input operation of hand writing by using a touching object. **Figure 12** shows a system block diagram in association with the hand writing operation demonstrated in **Figures 11A, 11B****,** and **11C****.**

When a user depresses the touching object **7a** against the touch operation surface **12** of the first substrate **10** to effect movement for carrying out hand writing input, the conductive layer **13** and the first electrode pattern **22** are forced into physical contact with each other at operation positions along the writing trace and this activates the touch device **100** to operate in the resistive touch position detection mode. The hand writing input operation causes a trace that comprises multiple operation positions **P4, P5, P6** along a movement locus in the travel direction **L.** At each of the operation positions **P4, P5, P6,** the driving voltage supply circuit **40** supplies the driving voltage **V** to the conductive layer **13** of the first substrate **10,** which in turn transmits the driving voltage **V** to the corresponding operation position of the first electrode pattern **22.** Thus, when the conductive layer **13** of the first substrate **10** is put in physical contact with the strip-like electrode **s3** of the first electrode pattern **22,** the driving voltage **V** is applied to the strip-like electrode **s3** of the first electrode pattern **22** and variation of voltage in the strip-like electrode **s3** of the first electrode pattern **22** is detected by the scanning operation of the first scanning circuit **51,** which in turn issues a scanning detection signal **N4** to the microprocessor **30.** The microprocessor **30** responds to the variation of voltage in the strip-like electrode **s3** of the first electrode pattern **22** and calculates the operation position **P4** of the touching object **7a** operating on the touch operation surface **12** of the first substrate **10.** In this way, the process is repeated for each of the operation positions **P4, P5, P6** and the first scanning circuit **51** sequentially scans and detects the scanning detection signal **N4** that is the applied to the microprocessor **30.** The microprocessor **30,** based on the detected operation positions **P4, P5, P6,** calculates the hand writing trace that the touching object **7a** operates on the touch operation surface **12** of the first substrate **10.**

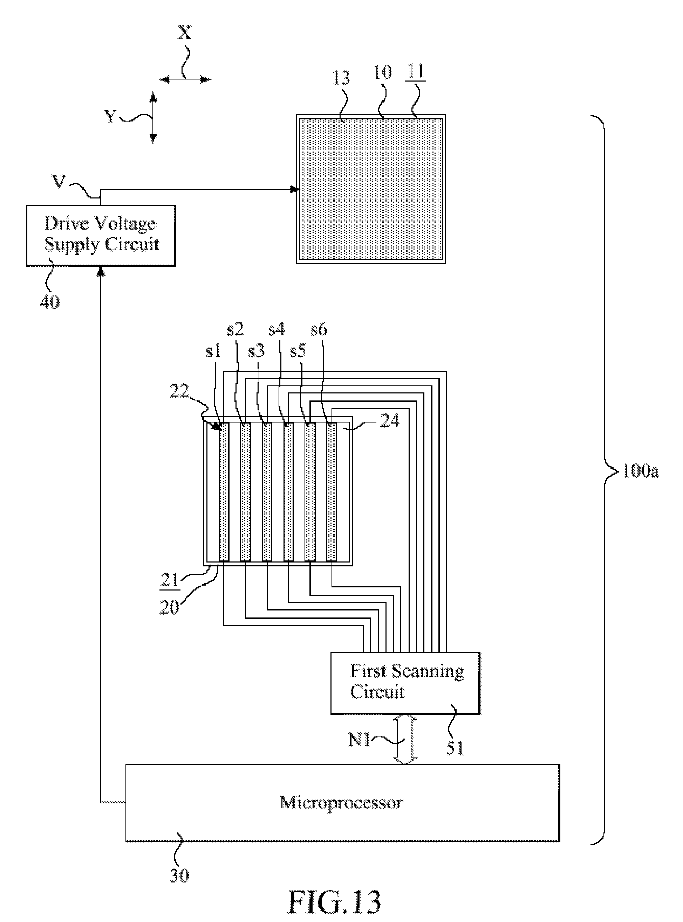

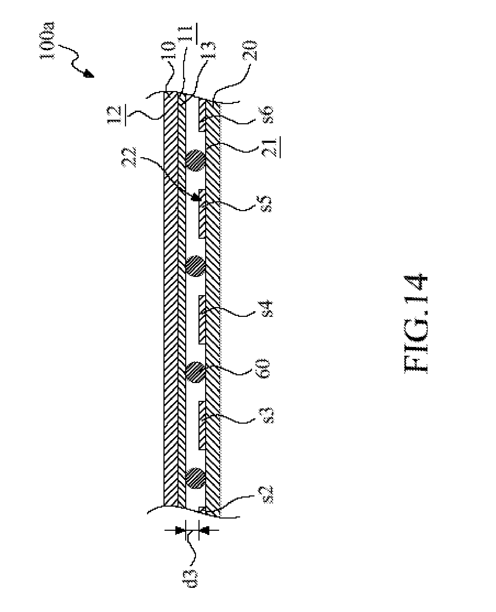

Referring to **Figures 13** and **14****,** **Figure 13** shows a system block diagram of a third embodiment in accordance with the present invention and **Figure 14** shows a cross-sectional view of **Figure 13****.** As shown, a touch device **100a** in accordance with the instant embodiment has a construction similar to that of the touch device **100** of the previous embodiment and a difference is that the touch device **100a** of the instant embodiment comprises a second substrate **20** which only forms a first electrode pattern **22** that comprises a plurality of strip-like electrodes **s1, s2, s3, s4, s5, s6**, which is spaced from the conductive layer **13** of the first substrate **10** by a predetermined third distance **d3** and is connected to the microprocessor **30** by the first scanning circuit **51.** The remaining elements/components that are identical in both embodiments are designated with the same reference numerals and description thereof will be omitted.

The operation of the instant embodiment is the same as that of the previous embodiment, and includes both capacitive and resistive touch control modes. When the touch operation surface **12** of the touch device **100a** is not operated as being depressed, the strip-like electrodes **s1, s2, s3, s4, s5, s6** of the first electrode pattern **22** are spaced from the conductive layer **13** of the first substrate **10** by the predetermined third distance **d3,** and the first electrode pattern **22** and the conductive layer **13** induce the first capacitance **Cx** therebetween.

When a touching object touches the touch operation surface **12** of the first substrate **10** to such an extent that the conductive layer **13** is not put into physical contact with the first electrode pattern **22,** the conductive layer **13** is depressed at the operation position so that the third predetermined distance **d3** between the conductive layer **13** and the first electrode pattern **22** is changed, leading to variation of the electrical capacity coupling between the conductive layer **13** and the first electrode pattern **22** so that the touch device **100a** is set in operation in the capacitive touch detection mode. The first scanning circuit **51** performs scanning to detect the variation of electrical capacitive coupling between the conductive layer **13** and the first electrode pattern **22,** and issues a scanning detection signal **N1** to the microprocessor **30.** The microprocessor **30** responds to the received variation of the electrical capacitive coupling and calculates the operation position that is being depressed or touched.

Similar to the first embodiment, when a touching object forcibly depress the touch operation surface **12** of the touch device **100a** and a hand writing input operation is carried out on the touch operation surface **12** of the touch device **100a,** the conductive layer **13** and the first electrode pattern **22** are depressed at the operation position, making the predetermined third distance **d3=0,** and the touch device **100a** is thus set in the resistive touch position detection mode. Under this condition, the conductive layer **13** of the first substrate **10** and one of the strip-like electrodes of the first electrode pattern **22** (such as the strip-like electrode **s4)** are put into contact with each other, allowing the driving voltage **V** to be applied to the strip-like electrode. The variation of voltage in the strip-like electrode **s4** of the first electrode pattern **22** can be detected by being scanned by the first scanning circuit **51,** whereby the microprocessor **30** can base on the variation of the voltage to calculate the operation position that is being touched.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A pressure detectable touch device having a touch operation surface adapted to be operated by a touching object, the touch device comprising:
a conductive layer to which a driving voltage is applied;
a first electrode pattern, which is set below the conductive layer and provides
a first predetermined distance from the conductive layer;
a second electrode pattern, which is set below the first electrode pattern and
provides a second predetermined distance from the conductive layer; and
a microprocessor, which is electrically connected to the conductive layer, the
first electrode pattern, and the second electrode pattern;
wherein when the touching object touches the touch operation surface of the touch device at an operation position, the conductive layer is depressed at the operation position, causing a variation of the distance between the conductive layer and the first electrode pattern, which leads to a change of electrical capacitive coupling between the conductive layer and the first electrode pattern and also causing a variation of the distance between the conductive layer and the second electrode pattern, which leads to a change of electrical capacitive coupling between the conductive layer and the second electrode pattern, whereby the touch device is set in a capacitive touch position detection mode in which the microprocessor determines the operation position where the touching object operates the touch operation surface according to the change of electrical capacitive coupling between the conductive layer and the first electrode pattern and the change of electrical capacitive coupling between the conductive layer and the second electrode pattern; and
wherein when the touching object forcibly depresses the touch operation surface of the touch device or when a hand writing input operation is performed on the touch operation surface of the touch device, the conductive layer is depressed at an operation position, making the conductive layer in physical contact with at least one corresponding position of the first electrode pattern, whereby the touch device is set in a resistive touch position detection mode in which the conductive layer applies the driving voltage to the corresponding position of the first electrode pattern and the microprocessor determines at least one operation position on the touch operation surface of the touch device according to variation of voltage in the first electrode pattern.

2. The pressure detectable touch device as claimed in Claim 1, wherein the first electrode pattern and the second electrode pattern each comprises a plurality of strip-like electrodes that are parallel to and spaced from each other.

3. The pressure detectable touch device as claimed in Claim 2, wherein the strip-like electrodes of the first electrode pattern are connected to the microprocessor via a first scanning circuit and wherein the strip-like electrodes of the second electrode pattern are connected to the microprocessor via a second scanning circuit.

4. The pressure detectable touch device as claimed in Claim 2, wherein the microprocessor supplies the driving voltage to the conductive layer through a driving voltage supply circuit.

5. A pressure detectable touch device, comprising:
a first substrate, which comprises a conductive layer bonding surface and a touch operation surface;
a conductive layer, which is formed on the conductive layer bonding surface of the first substrate;
a second substrate, which comprises an electrode pattern bonding surface;
a first electrode pattern, which is set below the conductive layer and provides
a first predetermined distance from the conductive layer and is spaced from the conductive layer by insulation spacers; and
a second electrode pattern, which is set below the first electrode pattern and is formed on the electrode pattern bonding surface of the second substrate, the second electrode pattern providing a second predetermined distance from the conductive layer, the second electrode pattern being spaced from the first electrode pattern by an insulation layer;

6. The pressure detectable touch device as claimed in Claim 5, wherein the first electrode pattern and the second electrode pattern each comprises a plurality of strip-like electrodes that are parallel to and spaced from each other.

7. The pressure detectable touch device as claimed in Claim 6, wherein the strip-like electrodes of the first electrode pattern form recessed portions corresponding to intersections thereof with the strip-like electrodes of the second electrode pattern.

8. The pressure detectable touch device as claimed in Claim 6, wherein the device further comprises a microprocessor, which is electrically connected to the conductive layer of the first substrate, the first electrode pattern and the second electrode pattern.

9. The pressure detectable touch device as claimed in Claim 8, wherein the strip-like electrodes of the first electrode pattern are connected to the microprocessor via a first scanning circuit and wherein the strip-like electrodes of the second electrode pattern are connected to the microprocessor via a second scanning circuit.

10. The pressure detectable touch device as claimed in Claim 8, wherein the
microprocessor supplies a driving voltage to the conductive layer through a driving voltage supply circuit.

11. A pressure detectable touch device having a touch operation surface adapted to be operated by a touching object, comprising:
a conductive layer to which a driving voltage is applied;
a first electrode pattern, which is set below the conductive layer and provides a first predetermined distance from the conductive layer;
a microprocessor, which is electrically connected to the conductive layer and the first electrode pattern;
wherein when the touching object touches the touch operation surface of the touch device at an operation position, the conductive layer is depressed at the operation position, causing a variation of the distance between the conductive layer and the first electrode pattern, which leads to a change of electrical capacitive coupling between the conductive layer and the first electrode pattern, whereby the touch device is set in a capacitive touch position detection mode in which the microprocessor determines the operation position where the touching object operates the touch operation surface according to the change of electrical capacitive coupling between the conductive layer and the first electrode pattern; and
wherein when the touching object forcibly depresses the touch operation surface of the touch device or when a hand writing input operation is performed on the touch operation surface of the touch device, the conductive layer is depressed at an operation position, making the conductive layer in physical contact with at least one corresponding position of the first electrode pattern, whereby the touch device is set in a resistive touch position detection mode in which the conductive layer applies the driving voltage to the corresponding position of the first electrode pattern and the microprocessor determines at least one operation position on the touch operation surface of the touch device according to variation of voltage in the first electrode pattern.

12. The pressure detectable touch device as claimed in Claim 11, wherein the first electrode pattern comprises a plurality of strip-like electrodes that are parallel to and spaced from each other.

13. The pressure detectable touch device as claimed in Claim 12, wherein the strip-like electrodes of the first electrode pattern are connected to the microprocessor via a first scanning circuit.

14. The pressure detectable touch device as claimed in Claim 11, wherein the microprocessor supplies the driving voltage to the conductive layer through a driving voltage supply circuit.
